# EUROPEAN PATENT SPECIFICATION

(11) **EP 0 272 737 B1**
(45) Date of publication and mention of the grant of the patent: **22.11.1995**
(21) Application number: 87202430.2
(22) Date of filing: 07.12.1987
(51) Int. Cl.: C08H 5/02, C07G 1/00

(54) **Process for the production of regenerated humic acids from coal**
Verfahren zur Herstellung von Huminsäuren aus Kohle
Procédé pour la préparation d'acide humique à partir du charbon

(30) Priority: 18.12.1986 IT 2274486
(43) Date of publication of application: 29.06.1988
(73) Proprietor: ENIRICERCHE S.p.A., 20121 Milano (IT)
(72) Inventor: Calemma, Vincenzo, I-20097 San Donato Milanese Milan (IT); Rausa, Riccardo, I-20097 San Donato Milanese Milan (IT)
(74) Representative: Fusina, Gerolamo

(56) References cited:
- DE-C- 803 836
- CHEMICAL ABSTRACTS, vol. 72, no. 10, 9th March 1970, page 157, abstract no. 45847j, Columbus, Ohio, US; B.G. GABERMAN et al.: "Oxidation of coal with air in a fluidized bed under pressure"
- PATENT ABSTRACTS OF JAPAN, vol. 5, no. 124 (C-66)[796], 11th August 1981; & JP-A-56 61 482

## Description

This invention relates to the production of humic acids by oxidation of coal in the dry phase with an oxygen-containing gas mixture in a fluid bed reactor.

Humic acids can be used as fertilizers, as such or in admixture with other fertilizers, and also for removing metals from water. The prior art has taught a number of processes for preparing humic acids by coal oxidation.

GB-A-1 283 385 oxidizes coal with nitric acid or nitrogen oxides.

JP-A-70/10723 oxidizes coal in an aqueous phase, at an acidic pH.

U.S.Bureau of Mines, Int.Circ.No.8234, (1963), page 74 oxidizes coal in an aqueous phase, but at an alkaline pH. Chemical Abstracts, 72, No.10, page 157, Abstr.No.45847j discloses a process of fluidized-bed coal oxidation at a temperature of from 150°C to 200°C, under a pressure of from ambient pressure to 14,7 bar (15 atm) and with contact times up to 15 hours, and recommend pressures higher than the atmospheric.

DE-C-803 836 oxidizes not only coal, but also other materials such as wood, peat, pitches, asphalt and admits temperatures of from 150°C to 300°C and even higher or lower temperatures outside that range: it recommends the use of comminuted materials but without specifying anything as to specific particle size ranges. Such processes are impaired by a number of drawbacks, namely:
For the oxidation with nitric acid or nitrogen oxides, the defects are:
reactant-waste and high cost, the obtained product being of an unsatisfactory quality;
poor selectivity towards humic acids (maximum humic acids/fulvic acids weight ratio is 4);
long reaction times for coal size greater than 100 µm;
For the oxidation with oxygen in an aqueous phase, at a basic pH, the defects are:
low yields, not exceeding 45%;
high alkali consumption (coal/alkali ratio from 1,5 to 2,5);
High oxygen partial pressures ( from 19,6 bar to 29,4 bar (20 abs.atm to 30 abs.atm);
Poor humic acids selectivity (humic acids/fulvic acids ratio from 2,5 to 3);
Carbon dioxide evolution, from 15% to 25%.
For the oxidation with oxygen in an aqueous phase at an acidic pH, the defects are:
High consumption of expensive chemicals and long reaction times.

Selectivity and yields of the latter process are not known, but it can be reasonably surmised that they are rather low.

With a view to overcoming the drawbacks and defects outlined above, the present invention provides a process for producing humic acids by oxidation of coal in the dry phase with oxygen or mixtures of oxygen and nitrogen in a fluid bed reactor, at a temperature of from 150°C to 300°C, under a partial pressure of oxygen of from 1,079 bar (1,1 abs.atm.) to 9,8066 bar (10 abs.atm.) for a contact time of from 30 min to 600 min, said coal having a particle size of from 100 µm to 3 mm, characterized in that it comprises the steps of:
(a) heating the coal in an inert gas atmosphere to a temperature lower than that necessary for oxidation, and
(b) raising the temperature to promote oxidation, by introducing oxygen in the reactor in lieu of the inert gas.

The product obtained by the process outlined above can be removed from the oxidized coal by extracting them with an alkaline solution.

As starting coals, those selected in the range from lignite to bituminous coals are preferred.

If humic acids are to be prepared from lignite, the preferred oxidation temperature range is from 150°C to 225°C, and the contact time is from 30 min to 240 min.

If lignite with a particle size below 300 µm is used, the preferred oxygen partial pressure range is from 1,07 bar to 1,96 bar (1,1 abs.atm to 2 abs.atm).

If humic acids are to be prepared from sub-bituminous coals, the preferred oxidation temperature range is from 175°C to 250°C, and the contact time is from 30 min to 360 min.

If a sub-bituminous coal with a particle size below 300 µm is used, the preferred oxygen partial pressure range is from 1,07 bar to 2,94 bar (1,1 abs.atm to 3 abs.atm).

If humic acids are to be prepared from coals, the preferred oxidation temperature range is from 200°C to 270°C, and the contact time is from 30 min to 360 min.

If a bituminous coal with a particle size below 300 µm is used, the preferred oxygen partial pressure range is from 1,07 bar to 4,90 bar (1,1 abs.atm to 5 abs.atm).

The process of this invention will be better illustrated by the ensuing practical examples.

### Example 1

30 g of a Wyodak coal, having a particle size of from 250 to 106 µm, previously dried, was charged to the reactor.

The reactor was then pressurized by feeding nitrogen at a suitable flowrate for the fluidization, and the temperature inside the reactor was raised to 180°C.

After this preliminary step, air was fed, at the same time stabilizing the temperature at 200°C ± 3°C for the desired time, after which the reaction was quenched by again feeding nitrogen, and cooling the equipment.

On the oxidized coal, the content of humic acids was then determined, by operating as follows.

10 g of sample and 150 ml of 1 N NaOH were placed inside a flask, and refluxed under an inert atmosphere (N₂), with stirring, for 7 hours.

The reaction mixture was cooled and centrifuged to separate the residue.

The residue was washed once with 0.1 N NaOH, and subsequently with water.

The washes were combined with the solution obtained from the centrifugation.

The residue was dried, and its weight and its content of organic matter here determined.

The humic acids contained in the solution were recovered by precipitation, by adding H₂SO₄ or HCl up to pH = 2, and centrifuging. The solid was then dried, and its weight and its content of organic matter were determined.

The content of fulvic acids was determined by charging 10 g of oxidated coal with 130 ml of 0.01 N HCl to a flask, and heating at 80°C, with stirring, for 3 hours, under an inert atmosphere of nitrogen. The residue was then washed with water, dried, and its weight determined.

On the so obtained sample, the content of organic matter was determined, and, by difference with the content of organic matter of the coal used as the starting product, the content of fulvic adis was determined.

The reaction conditions were the following:

| | |
|---|---|
| Temperature | = 200°C |
| Oxygen partial pressure | = 1,07 bar (1.1 abs.atm) |
| Particle size | = 250 - 106 µm |

The results obtained are reported in the following Table:

| Time (h) | Humic Acids % | Residue % | CO+CO₂ % | Fulvic Acids % |
|---|---|---|---|---|
| 0 | 10 | 86 | - | - |
| 0.5 | 29 | 69 | 2.5 | 2 |
| 1 | 51 | 47 | 4.0 | 2 |
| 2 | 59 | 38 | 6.6 | 5 |
| 4 | 69 | 29 | 9.4 | 3 |
| 6 | 73 | 24 | 12.1 | 9 |
| 8 | 75 | 21 | 12.8 | 5 |
| (The values relating to humic acids, residue and fulvic acids relate to the organic matter contained in the oxidized coal, whereas the yields of CO+CO₂ are referred to the carbon content of the coal used as the starting material). | | | | |

### Example 2

By using the same procedure as of Example 1, 30 g of Wyodak coal were oxidated under the following conditions:

| | |
|---|---|
| Temperature | = 200°C |
| Oxygen partial pressure | = 4,90 bar (5 abs.atm) |
| Particle size | = 250 - 106 µm |
| Oxidizing agent | = N₂/O₂ mixture at 50% |

The results obtained are reported in the following Table:

| Time (h) | Humic Acids % | Residue % | CO+CO₂ % | Fulvic Acids % |
|---|---|---|---|---|
| 0 | 10 | 86 | - | - |
| 0.5 | 52 | 38 | 3.4 | 4 |
| 1 | 66 | 28 | 6.3 | 7 |
| 1.5 | 75 | 19 | 9.4 | 5 |
| 2.0 | 83 | 15 | 10.6 | 8 |
| 2.5 | 86 | 10 | 11.4 | 5 |
| 3.0 | 88 | 10 | 13.2 | 8 |
| (The values relating to humic acids, residue and fulvic acids relate to the organic matter contained in the oxidized coal, whereas the yields of CO+CO₂ are referred to the carbon content of the coal used as the starting material). | | | | |

### Example 3

By using the same procedure as of Example 1, 30 g of Wyodak coal were oxidated under the following conditions:

| | |
|---|---|
| Temperature | = 200°C |
| Oxygen partial pressure | = 4,90 bar (5 abs.atm) |
| Particle size | = 3 mm - 1 mm |
| Oxidizing agent | = N₂/O₂ mixture at 50% |

The results obtained are reported in the following Table:

| Time (h) | Humic Acids % | Residue % | CO+CO₂ % | Fulvic Acids % |
|---|---|---|---|---|
| 0 | 10 | 86 | - | - |
| 1 | 42 | 54 | 4.3 | 4 |
| 2 | 61 | 36 | 6.8 | 7 |
| 4 | 75 | 23 | 8.4 | 8 |
| 6 | 79 | 17 | 10.1 | 4 |
| 8 | 83 | 12 | 11.2 | 5 |
| 10 | 81 | 13 | 13.7 | 6 |
| (The values relating to humic acids, residue and fulvic acids relate to the organic matter contained in the oxidized coal, whereas the yields of CO+CO₂ are referred to the carbon content of the coal used as the starting material). | | | | |

### Example 4

By using the same procedure as of Example 1, 30 g of Illinois No. 6 coal were oxidated under the following conditions:

| | |
|---|---|
| Temperature | = 200°C |
| Oxygen partial pressure | = 1,07 bar (1.1 abs.atm) |
| Particle size | = 250 - 106 µm |
| Oxidizing agent | = Air |

The results obtained are reported in the following Table:

| Time (h) | Humic Acids % | Residue % | CO+CO₂ % | Fulvic Acids % |
|---|---|---|---|---|
| 0 | 3 | 95 | - | - |
| 1 | 11 | 86 | 3 | 3 |
| 2 | 24 | 74 | 5 | 7 |
| 4 | 61 | 36 | 8 | 8 |
| 6 | 71 | 25 | 10 | 5 |
| 8 | 73 | 20 | 12 | 5 |
| (The values relating to humic acids, residue and fulvic acids relate to the organic matter contained in the oxidized coal, whereas the yields of CO+CO₂ are referred to the carbon content of the coal used as the starting material). | | | | |

### Example 5

By using the same procedure as of Example 1, 30 g of Illinois No. 6 coal were oxidated under the following conditions:

| | |
|---|---|
| Temperature | = 200°C |
| Oxygen partial pressure | = 4,90 bar (5 abs.atm) |
| Particle size | = 250 - 106 µm |
| Oxidizing agent | = N₂/O₂ mixture at 50% |

The results obtained are reported in the following Table:

| Time (h) | Humic Acids % | Residue % | CO+CO₂ % | Fulvic Acids % |
|---|---|---|---|---|
| 0 | 3 | 95 | - | - |
| 0.5 | 31 | 67 | 4 | 4 |
| 1 | 49 | 47 | 6 | 7 |
| 1.5 | 61 | 35 | 7 | 5 |
| 2.0 | 75 | 21 | 8 | 3 |
| 2.5 | 77 | 18 | 9 | 5 |
| 3.0 | 76 | 18 | 10 | 8 |
| (The values relating to humic acids, residue and fulvic acids relate to the organic matter contained in the oxidized coal, whereas the yields of CO+CO₂ are referred to the carbon content of the coal used as the starting material). | | | | |

### Example 6

By using the same procedure as of Example 1, 30 g of Illinois No. 6 coal were oxidated under the following conditions:

| | |
|---|---|
| Temperature | = 200°C |
| Oxygen partial pressure | = 4,90 bar (5 abs.atm) |
| Particle size | = 3 - 1 mm |
| Oxidizing agent | = N₂/O₂ mixture at 50% |

The results obtained are reported in the following Table:

| Time (h) | Humic Acids % | Residue % | CO+CO₂ % | Fulvic Acids % |
|---|---|---|---|---|
| 0 | 3 | 95 | - | - |
| 1 | 10 | 87 | 5 | 5 |
| 2 | 23 | 73 | 8 | 3 |
| 4 | 41 | 54 | 10 | 2 |
| 6 | 57 | 41 | 11 | 4 |
| 8 | 68 | 29 | 12 | 6 |
| 10 | 75 | 21 | 13 | 6 |
| (The values relating to humic acids, residue and fulvic acids relate to the organic matter contained in the oxidized coal, whereas the yields of CO+CO₂ are referred to the carbon content of the coal used as the starting material). | | | | |

## Claims

1. Process for producing humic acids by oxidizing coal in the dry phase with oxygen or mixtures of oxygen and nitrogen in a fluid bed reactor, at a temperature of from 150°C to 300°C, under a partial pressure of oxygen of from 1,079 bar (1,1 abs.atm.) to 9,8066 bar(10 abs.atm.) for a contact time of from 30 min to 600 min, said coal having a particle size of from 100 µm to 3 mm,
**characterized in that it comprises the steps of:**
(a) Heating the coal in an inert gas atmosphere to a temperature lower than that necessary for oxidation, and
(b) Raising the temperature to promote oxidation, by introducing oxygen in the reactor in lieu of the inert gas.

2. Process according to Claim 1, wherein coal is selected from coals ranging from lignite to bituminous coals.

3. Process according to Claim 1, wherein the mixture of oxygen and nitrogen is air.

4. Process according to Claim 2, wherein coal is lignite, and the oxidation stage (b) is carried out at a temperature of from 150°C to 225°C, for a contact time of from 30 min to 240 min.

5. Process according to Claim 4, wherein the particle size of lignite is smaller than 300 µm, and the oxidation stage (b) is carried out under an oxygen partial pressure of from 1,079 bar (1,1 abs.atm.) to 1,96132 bar (2 abs.atm).

6. Process according to Claim 2, wherein coal is a sub-bituminous coal, and the oxidation stage (b) is carried out at a temperature of from 175°C to 250°C, for a contact time of from 30 min to 360 min.

7. Process according to Claim 6, wherein the particle size of the sub-bituminous coal is smaller than 300 µm and the oxidation stage (b) is carried out under an oxygen partial pressure of from 1,079 bar (1,1 abs.atm.) to 2,94198 bar (3 abs.atm.).

8. Process according to Claim 2, wherein coal is a bituminous coal, and the oxidation stage (b) is carried out at a temperature of from 200°C to 270°C, for a contact time of from 30 min to 360 min.

9. Process according to Claim 8, wherein the particle size of the bituminous coal is smaller than 300 µm and the oxidation stage (b) is carried out under an oxygen partial pressure of from 1,079 bar (1,1 abs.atm.) to 4,9033 bar (5 abs.atm.).

10. Process according to Claim 1, wherein said inert gas for stage (a) is nitrogen.

## Patentansprüche

1. Verfahren zur Herstellung von Huminsäuren durch Trockenphaseoxidation von Kohle mit Sauerstoff oder Gemischen aus Sauerstoff und Stickstoff in einem Fließbettreaktor bei einer Temperatur von 150°C bis 300°C unter einem Sauerstoffpartialdruck von 1,079 bar (1,1 ata) bis 9,8066 bar (10 ata) bei einer Kontaktzeit von 30 Min. bis 600 Min., wobei die Kohle eine Korngröße von 100 µm bis 3 mm aufweist, dadurch gekennzeichnet, daß es die folgenden Schritte umfaßt:
(a) Erhitzung dar Kohle in einer Schutzgasatmosphäre auf eine Temperatur, die niedriger ist als die zur Oxidation erforderlich, und
(b) Erhöhung der Temperatur zur Förderung der Oxidation, indem in den Reaktor statt des Schutzgases Sauerstoff eingeleitet wird.

2. Verfahren nach Anspruch 1, wobei die Kohle aus einer Palette von Braunkohle bis Steinkohlen gewählt wird.

3. Verfahren nach Anspruch 1, wobei es sich bei dem Gemisch aus Sauerstoff und Stickstoff um Luft handelt.

4. Verfahren nach Anspruch 2, wobei es sich bei der Kohle um Braunkohle handelt und die Oxidationsstufe (b) bei einer Temperatur von 150°C bis 225°C mit einer Kontaktzeit von 30 Min. bis 240 Min. durchgeführt wird.

5. Verfahren nach Anspruch 4, wobei die Korngröße dar Braunkohle unter 300 µm liegt und die Oxidationsstufe (b) unter einem Sauerstoffpartialdruck von 1,079 bar (1,1 ata) bis 1,96132 bar (2 ata) durchgeführt wird.

6. Verfahren nach Anspruch 2, wobei es sich bei der Kohle um eine Moorkohle handelt und die Oxidationsstufe (b) bei einer Temperatur von 175°C bis 250°C mit einer Kontaktzeit von 30 Min. bis 360 Min. durchgeführt wird.

7. Verfahren nach Anspruch 6, wobei die Korngröße der Moorkohle unter 300 µm liegt und die Oxidationsstufe (b) unter einem Sauerstoffpartialdruck von 1,079 bar (1,1 ata) bis 2,94198 bar (3 ata) durchgeführt wird.

8. Verfahren nach Anspruch 2, wobei es sich bei der Kohle um eine Steinkohle handelt und die Oxidationsstufe (b) bei einer Temperatur von 200°C bis 270°C mit einer Kontaktzeit von 30 Min. bis 360 Min. durchgeführt wird.

9. Verfahren noch Anspruch 8, wobei die Korngröße der Steinkohle unter 300 µm liegt und die Oxidationsstufe (b) unter einem Sauerstoffpartialdruck von 1,079 bar (1,1 ata) bis 4,9033 bar (5 ata) durchgeführt wird.

10. Verfahren nach Anspruch 1, wobei es sich bei dem Schutzgas für Stufe (a) um Stickstoff handelt.

## Revendications

1. Procédé de production d'acides humiques par oxydation de charbon en phase sèche, avec de l'oxygène ou des mélanges d'oxygène et d'azote, dans un réacteur en lit fluidisé, à une température de 150°C à 300°C, sous une pression partielle d'oxygène de 1,079 bar (1,1 atm.abs.) à 9,8066 bars (10 atm.abs.), pendant un temps de contact de 30 min à 600 min, les particules de charbon ayant une taille de 100 µm à 3 mm, **caractérisé** en ce qu'il comporte les étapes consistant à :
a) chauffer le charbon sous atmosphère de gaz inerte, à une température inférieure à celle qui est nécessaire pour l'oxydation, et
b) élever la température pour amorcer l'oxydation, tout en introduisant de l'oxygène dans le réacteur, à la place du gaz inerte.

2. Procédé conforme à la revendication 1, dans lequel le charbon est choisi parmi les charbons qui vont des lignites aux charbons bitumineux.

3. Procédé conforme à la revendication 1, dans lequel le mélange d'oxygène et d'azote est de l'air.

4. Procédé conforme à la revendication 2, dans lequel le charbon est un lignite et l'étape d'oxydation (b) est effectuée à une température de 150°C à 225°C, pendant un temps de contact de 30 min à 240 min.

5. Procédé conforme à la revendication 4, dans lequel la taille des particules de lignite est inférieure à 300 µm, et l'étape d'oxydation (b) est effectuée sous une pression d'oxygène de 1,079 bar (1,1 atm.abs.) à 1,96132 bar (2 atm.abs.).

6. Procédé conforme à la revendication 2, dans lequel le charbon est un charbon sous-bitumineux et l'étape d'oxydation (b) est effectuée à une température de 175°C à 250°C, pendant un temps de contact de 30 min à 360 min.

7. Procédé conforme à la revendication 6, dans lequel la taille des particules de charbon sous-bitumineux est inférieure à 300 µm et l'étape d'oxydation (b) est effectuée sous une pression d'oxygène de 1,079 bar (1,1 atm.abs.) à 2,94198 bar (3 atm.abs.).

8. Procédé conforme à la revendication 2, dans lequel le charbon est un charbon bitumineux et l'étape d'oxydation (b) est effectuée à une température de 200°C à 270°C, pendant un temps de contact de 30 min à 360 min.

9. Procédé conforme à la revendication 8, dans lequel la taille des particules de charbon bitumineux est inférieure à 300 µm et l'étape d'oxydation (b) est effectuée sous une pression d'oxygène de 1,079 bar (1,1 atm.abs.) à 4,9033 bar (5 atm.abs.).

10. Procédé conforme à la revendication 1, dans lequel le gaz inerte utilisé dans l'étape (a) est de l'azote.
